# EUROPEAN PATENT APPLICATION

(11) **EP 4 631 733 A1**
(43) Date of publication of application: **15.10.2025**
(21) Application number: 24169235.9
(22) Date of filing: 09.04.2024
(51) Int. Cl.: B41J 11/00, B41M 7/00

(54) **METHOD FOR PRINTING A ROBUST INK LAYER**

(71) Applicant: Canon Production Printing Holding B.V., 5914 HH Venlo (NL)
(72) Inventor: VAN BEEK, Albert M., Venlo (NL); SLOT, Wouter C.J.N., Venlo (NL); LANDMESSER, Georg, Venlo (NL); RITZER, Alfons, Venlo (NL)
(74) Representative: Canon Production Printing IP Department

(57) **Abstract**

The present invention discloses a method for inducing film formation of printed ink and a print system comprising a module for applying this method. The ink, printed on a substrate, thus forming an image, comprises polymer particulates. Water droplets are finely dispersed on top of this image and are allowed to form a water layer in-between the polymer particulates. By evaporating the water at elevated temperatures and reduced vapor pressure, the particulates will experience a capillary force that induces the film formation. This method provides therefore a less energy consuming alternative for the application of super heated steam.

## Description

### BACKGROUND OF THE INVENTION

### 1. Field of the invention

The invention relates to a method for inducing film formation of printed ink, the ink comprising polymer particulates, the printed ink forming an image on a substrate. The invention further relates to a printing system comprising a module for printing ink comprising polymer particulates, thus forming a image on a substrate, a module for drying the ink and a module for inducing film formation of the printed ink.

### 2. Description of the Related Art

Besides its usage for home and office printing, inkjet technology has spread out to highspeed commercial and industrial printing. It provides a non-impact printing method that utilizes electronic signals to control and direct droplets of ink towards a substrate. The substrate comprises either a web or a stream of sheets that move with appropriate speed underneath a fixed printhead that stretches along the width of the web or sheets. The term "printhead", "print" and derivatives thereof are to be understood to include any device or technique that deposits or creates material on a surface in a controlled manner. In particular the term "printhead" comprises a page-wide array of nozzles, also known as ejection ports, through which the ink is forced by thermal ejection or piezoelectric actuation towards the surface of a substrate, that includes media like paper, plastic, metal, wood, transparent material, glass, cardboard, label stock, coated paper, textile or any other printable medium. The ink is any marking material, such as for example an UV curable ink, solvent based ink, water-based ink, hot melt ink, also known as phase change ink.

Specifically the use of water-based latex ink is interesting for production printing, such as described in EP 2823002 B1. This ink comprises polymer particulates, that may, under the right conditions, stretch out parallel to the surface of the substrate, thus forming a robust layer. In general, first the redundant water in the ink is removed from the ink after printing by treating the substrate with hot, dry air. Thereafter the printed image is subjected to superheated steam, which is steam at a temperature higher than its vaporization point at the absolute pressure where the temperature is measured, in order to promote the shaping of the stretched out particulates into a thin layer on the substrate. This technique has the required result, but a disadvantage is that a rather large space for this device is needed, also called a large footprint, and that a lot of energy is consumed.

Therefore, a different method for inducing film formation is wanted and an object of the invention is to obtain a more economical treatment of a printed image with ink comprising polymer particulates.

### SUMMARY OF THE INVENTION

In order to achieve this object, the method according to the invention comprises the steps of applying a water film on top of the image, allowing the water to form a layer in-between the polymer particulates and evaporating the water at elevated temperatures and reduced vapor pressure. The water film may be applied by condensing water vapor or by finely dispersing water in the form of droplets. The water may be at or slightly above room temperature. The elevated temperature is preferably in the range of 30 to 70 degrees Celsius and the reduced vapor pressure is preferably in the range of 10 to 100 hectoPascal. As is well-known, a hectoPascal is the unit for pressure in the International System of Units, corresponding to a millibar, which is sometimes a more familiar metric unit of pressure. For readability the prefixes hecto- and milli- are used in their common meaning. The optimal temperature and pressure are determined by the visco-elastic properties of the ink.

Without wanting to be bound to any theory, the inventors believe that remoistening the printed ink layer and subsequently evaporating the applied water, will generate a capillary force that is exerted on the polymer particulates. The adding of water and the process of evaporation can be repeated multiple times to optimize the film properties or to scale up to higher productivity.

In an embodiment, the water is dispersed by applying water from a print head. The droplets are 2 to 10 picoliter, or, equivalently, 2 to 10 nanogram and are sufficiently small to quickly remoisten the printed ink. After dispersing the water, the substrate is heated to evaporate the water from the ink layer under reduced vapor pressure. Alternatively, the substrate is cooled to obtain a water layer from condensation of vapor as a way of dispersing water droplets on top of the printed image. After heating the substrate, the vapor is regained, which makes this process very suitable for repetitive execution.

The invention is further embodied in a printing system comprising a module for printing ink comprising polymer particulates, thus forming a image on a substrate, a module for drying the ink and a module for inducing film formation of the printed ink, this last module comprising an element for finely dispersing water droplets on top of the image, a heating element for raising the temperature of the substrate, and a vapor pressure regulator for controlling the vapor pressure above the heated substrate. These elements may be configured to execute the invented method. The heating element may be providing heat to the substrate by conduction, by radiation, by hot air impingement or by a combination of these heating methods.

In particular, the module for inducing film formation comprises elements for alternatingly cooling and heating the substrate in order to have condensation and evaporation of water on and from the substrate.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Figure 1 shows a schematic overview of the steps of the invented method;
Figure 2 shows a print system with the various modules for printing according to the invention;
Figure 3 is a module for repetitive application of moistening and evaporation.

### DETAILED DESCRIPTION OF EMBODIMENTS

The present invention will now be described with reference to the accompanying drawings, wherein the same or similar elements are identified with the same reference numeral.

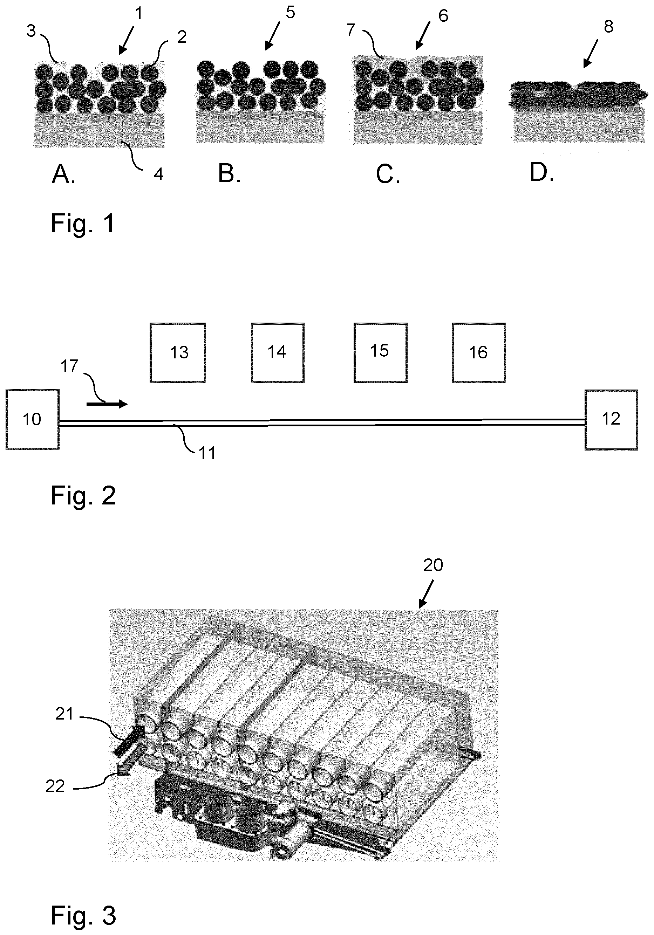

Schematically, the process of depositing a latex ink on a substrate, as shown in Fig. 1 part A, yields an ink layer 1, wherein particulates 2 immersed in water 3 are covering the substrate 4. These particulates have a size in the submicrometer range. Removing the water by treating the substrate with hot air gives a printed image 5 that is rather susceptible to smudging, because the individual particles are hardly bound together (Fig. 1, part B). In a further step, part C, the printed image 6 is provided with finely dispersed water 7 that wets the particulates from the upper side. Removing this water by an elevated temperature and reduced vapor pressure makes the particulates intertwine, thus stabilizing the resulting layer (Fig. 1, part D).

Figure 2 shows the arrangement of a print system wherein the invented method is applied. The print process of this system comprises a media input module 10 that feeds sheets of paper or other material that can be fed in the form of sheets to a belt 11 that operates at a speed up to 2 m/s in the direction of arrow 17. The belt 11 may comprise two separate belts operating at a similar speed in order to create more independence of the media movement along the path. The process may also be implemented for web-like media, in which case the input module 10 is a roll of the material and 11 symbolizes the path of the web in the print system. The path ends in an output module 12, where the individual sheets are collected for potential finishing, such as stapling or another form of binding. In the case of web-like media, module 12 may be a roll winding the processed media.

Module 13 is a pre-treatment module, such as a plasma process for activating a surface of the receiving media for better adhesion. This may not be necessary for all media, but can be used advantageously in the case of media that do not absorb water very well. Alternatively, the pre-treatment module 13 is an additional printhead for depositing an initial material onto the receiving media. This material may be beneficial for improving the adhesion of the ink to the media or may work to bind one of the components in the ink. The application of the pre-treatment module depends on the type of media that is printed upon.

In a further processing module, 14, the ink is deposited onto the receiving media by printheads that have effectively 1200 nozzles per inch. In another embodiment the nozzle density is 2400 nozzles per inch. Commonly four different inks are applied in the colors black, cyan, magenta and yellow, but in the case of production printing often additional inks in the colors orange, violet and green are used. Hereby a sufficiently large color gamut is obtained. The subsequent module 15 provides hot air to remove redundant water from the printed ink layer, which brings the polymer particulates in the ink closer together. Finally, module 16 is set to induce film formation in the remaining material. In the invented embodiment, the film formation is caused by wetting the material with finely dispersed water droplets. These can be supplied by a separate printhead. This freshly applied water is removed by a combination of heat, raising the temperature to 50 degrees Celsius and reduced vapor pressure, in this particular embodiment 20 hectoPascal. Alternatively, a repetitive heating and cooling of the substrate is applied with a module 20 as shown in Figure 3. The cooling part of the process causes water to condense on the medium with the ink layer on top, whereas the heating part causes the condensed water to evaporate. The cooling is provided by gas of a temperature of 10 degrees Celsius at the inlet 21, the gas coming out from outlet 22 at a temperature close to the medium temperature. In a next compartment, heated gas of a temperature of 50 degrees Celsius is provided to heat the medium, thereby causing the condensed water to evaporate. By repeating this process for a number of times, in this case five times, the film formation was found to be induces and the ink was strongly bound to the medium.

The skilled person will recognise that other embodiments are possible within the scope of the appended claims.

## Claims

1. A method for inducing film formation of printed ink, the ink comprising polymer particulates, the printed ink forming an image on a substrate, the method comprising the steps of:
a. applying a water film on top of the image;
b. allowing the water to form a layer in-between the polymer particulates, and
c. evaporating the water at elevated temperatures and reduced vapor pressure.

2. The method according to claim 1, wherein the elevated temperature is in the range of 30 to 70 degrees Celsius and the reduced vapor pressure is in the range of 10 to 100 hectoPascal.

3. The method according to claim 1, wherein the water film is applied by dispersing water droplets from a print head.

4. The method according to claim 1, wherein the substrate temperature is such that a water film is obtained from condensation of water vapor on top of the image.

5. Printing system comprising a module for printing ink comprising polymer particulates, thus forming a image on a substrate, a module for drying the ink and a module for inducing film formation of the printed ink, this last module comprising
a. an element for applying a water film on top of the image;
b. a heating element for raising the temperature of the substrate, and
c. a vapor pressure regulator for controlling the vapor pressure above the heated substrate,
wherein the elements are configured to apply a method according to claim 1.

6. A print system according to claim 5, wherein the element for applying a water film is a printhead.

7. A print system according to claim 5, wherein the heating element comprises a hot air impingement element.

8. A print system according to claim 5, wherein the module for inducing film formation comprises elements for alternatingly cooling and heating the substrate in order to have condensation and evaporation of water on and from the substrate.

9. A print system according to claim 5, wherein the ink is a water-based latex.
